# EUROPÄISCHE PATENTANMELDUNG

(11) **EP 3 591 571 A1**
(43) Veröffentlichungstag der Anmeldung: **08.01.2020**
(21) Anmeldenummer: 18181462.5
(22) Anmeldetag: 03.07.2018
(51) Int. Cl.: G06K 9/00

(54) **VERFAHREN ZUR AUTOMATISCHEN VERARBEITUNG EINES DOKUMENTS**

(71) Anmelder: Definition12 GmbH, 4153 Reinach (CH); ABH-tec AG, 5405 Baden 5 Dättwil (CH)
(72) Erfinder: Gersbach, Beat, 4144 Arlesheim (CH)
(74) Vertreter: Mertzlufft-Paufler, Cornelius

(57) **Zusammenfassung**

Es wird vorgeschlagen, bei einem Verfahren zur automatischen Verarbeitung eines einzulesenden Dokuments (1, 13, 25, 39, 53, 95, 107) vorzusehen, dass in einem Identifikationsschritt (202, 204, 206, 208, 210, 212) Schlüsselwörtern (5, 57, 61, 65) jeweils eine zugehörige Bildposition (8) in dem eingelesenen Dokument (1, 13, 25, 39, 53, 95, 107) computergestützt ermittelt und anhand der ermittelten Bildpositionen (8) ein Dokumententyp (21, 53) für das eingelesene Dokument (1, 13, 25, 39, 53, 95, 107) aus einer Liste von Dokumententypen (21, 53) computergestützt ausgewählt wird, dass der ausgewählte Dokumententyp (21, 53) ein Suchfenster (27, 41, 55, 73, 75, 85, 97, 109) vorgibt (216), dessen Fensterposition (31, 33, 35, 37, 45, 47) im eingelesenen Dokument (1, 13, 25, 39, 53, 95, 107) relativ zu einer durch die ermittelten Bildpositionen (8) gegebenen Geometrie 11 des eingelesenen Dokuments (1, 13, 25, 39, 53, 95, 107) definiert ist, und dass in einem Ausleseschritt (218, 220, 222, 224) ein Wort (30, 43, 51, 57, 61, 65, 69, 71, 77, 83, 87, 93, 103) in dem Suchfenster (27, 41, 55, 73, 75, 85, 97, 109) computergestützt ausgelesen. (vgl. Fig. 4)

## Beschreibung

Die Erfindung betrifft ein Verfahren zur automatischen Verarbeitung eines Dokuments, wobei ein Dokument eingelesen wird und in dem eingelesenen Dokument automatisch ein Satz von Schlüsselwörtern gesucht wird. Der Satz von Schlüsselwörtern wird üblicherweise mehrere Schlüsselwörter umfassen, kann jedoch auch lediglich ein einzelnes Schlüsselwort enthalten. Das Einlesen des Dokuments kann beispielsweise durch Einscannen oder Abfotografieren des Dokuments erfolgen oder durch Verarbeitung einer Datei, welche Informationen über das Dokument enthält. Um die Suche nach dem Satz von Schlüsselwörtern zu erleichtern, kann beim oder nach dem Einlesen des Dokuments eine Texterkennung erfolgen, welche beispielsweise mittels einer OCR-Software durchgeführt werden kann.

Ein solches Verfahren kommt in der Praxis beispielsweise zum Einsatz, um Buchungsvorgänge zu automatisieren. Derartige Vorgänge können zum Beispiel Lieferantenrechnungen, Belege oder Buchungen von oder auf Bankkonten betreffen.

Die automatisierte Verarbeitung von Dokumenten bereitet in der Praxis insbesondere dann Probleme, wenn das einzulesende Dokument von einem Standarddokument abweicht. Abweichungen können beispielsweise durch geometrische Verzerrungen oder inhaltliche Abweichungen entstehen.

Der Erfindung liegt die Aufgabe zugrunde, eine automatisierte Verarbeitung von Dokumenten zu verbessern. Insbesondere soll ein Verfahren geschaffen werden, welches robuster ist gegenüber Abweichungen des eingelesenen Dokuments von einem Standarddokument.

Zur Lösung dieser Aufgabe schlägt die Erfindung die Merkmale von Anspruch 1 vor. Insbesondere wird somit erfindungsgemäß bei einem Verfahren der eingangs beschriebenen Art zur Lösung der genannten Aufgabe vorgeschlagen, dass in einem Identifikationsschritt zu den Schlüsselwörtern des Satzes jeweils eine zugehörige Bildposition in dem eingelesenen Dokument computergestützt ermittelt und zumindest anhand der ermittelten Bildpositionen ein Dokumententyp für das eingelesene Dokument aus einer Liste von Dokumententypen computergestützt ausgewählt wird. Ein Dokumententyp kann dadurch charakterisiert sein, dass er eine Liste von Schlüsselwörtern und deren Bildpositionen enthält. Weiter kann ein Dokumententyp Referenzwörter und/oder Zielorte sowie deren jeweilige Bildpositionen enthalten. Auch können Verwendungen zu den Zielorten vorgegeben sein. Die Auswahl des Dokumententyps erfolgt vorzugsweise zusätzlich anhand der Schlüsselwörter selbst. Weiter ist erfindungsgemäß vorgesehen, dass der ausgewählte Dokumententyp ein Suchfenster vorgibt. Es kann hierbei genau ein Suchfenster oder mehr als ein Suchfenster vorgegeben sein. Weiter ist erfindungsgemäß vorgesehen, dass eine Fensterposition des Suchfensters im eingelesenen Dokument relativ zu einer durch die ermittelten Bildpositionen gegebenen Geometrie des eingelesenen Dokuments definiert ist, und dass in einem Ausleseschritt ein Wort in dem Suchfenster computergestützt ausgelesen wird, dessen Inhalt ausgegeben wird. Das Auslesen eines Wortes ist so zu verstehen, dass mindestens ein Wort ausgelesen wird. Dieses Vorgehen ermöglicht eine automatisierte Verarbeitung von Dokumenten, welche gegenüber einem Standarddokument abweichen. Insbesondere können unterschiedliche Dokumententypen verarbeitet werden. Infolge der zu einem durch die Bildpositionen der Schlüsselwörter vorgegebenen Geometrie, welche ein Raster bilden kann, und einem vorgegebenen Suchfenster, kann ein Verfahren geschaffen werden, bei dem geometrische Verzerrungen des Dokuments oder geometrische oder inhaltliche Veränderungen gegenüber einem Standardformat den Verarbeitungsvorgang nicht stören. Durch die vorgeschlagene Lösung wird daher eine automatisierte Verarbeitung von Dokumenten verbessert.

Die Erfindung hat den Vorteil, dass Dokumententypen unterscheidbar sind, auch wenn dieselben Schlüsselwörter - nur an verschiedenen Bildpositionen - in zwei Dokumententypen vorkommen. Auch ist es möglich, den Fall zu beachten, dass Schlüsselwörter in einem Dokument mehrfach auftauchen, wobei die weiteren Vorkommen der Schlüsselwörter zufällig sind.

Soweit im Folgenden Varianten der Erfindung beschrieben werden, können diese miteinander kombiniert werden, es sei denn eine Kombination technischer Merkmale ist ausnahmsweise aus tatsächlichen Gründen nicht möglich.

Bei einer vorteilhaften Ausgestaltung des Verfahrens kann vorgesehen sein, dass in dem Suchfenster ein Zielort definiert ist, dass alle Wörter im Suchfenster ausgelesen werden und dass der Inhalt desjenigen Wortes, das im Suchfenster am nächsten am Zielort liegt, ausgegeben wird. Der Zielort kann insbesondere durch ein Zielfenster oder einen Zielpunkt gegeben sein. Alternativ wird der Inhalt desjenigen Wortes ausgegeben, dessen Inhalt ein vorgegebenes Kriterium erfüllt. Als Kriterium kommt in Betracht, dass der Inhalt beispielsweise der formalen Struktur nach ein Datum repräsentiert oder einen Geldbetrag. Es können auch beide zuvor genannten Bedingungen zugleich gefordert sein. So kann vorgesehen sein, dass von allen im Suchfenster ausgelesenen Wörtern, deren jeweiliger Inhalt ein vorgegebenes Kriterium erfüllt, der Inhalt desjenigen Wortes ausgegeben wird, das im Suchfenster am nächsten am Zielort liegt. Diese Ausgestaltungen der Erfindung haben den Vorteil, dass der richtige Inhalt ausgeben wird, auch wenn sich das betreffende Wort nicht genau an der vermuteten Stelle befindet.

Ein besonders praktikables, kompatibles und effizientes Verfahren ergibt sich, wenn die Wörter im Suchfenster in Spalten oder Zeilen nach ihrer jeweiligen Bildposition geordnet werden und dasjenige Wort ausgewählt wird, welches in einer durch die Spalte oder Zeile vorgegebenen Reihenfolge am nächsten zum Zielort liegt. Alternativ oder zusätzlich kann vorgesehen sein, dass das Wort ein Kriterium erfüllt, beispielsweise das bereits zuvor genannte Kriterium.

Die Fensterposition des Suchfensters kann einen Parameter enthalten, der durch eine Bildposition eines Referenzwortes in dem eingelesenen Dokument relativ zu den Bildpositionen der Schlüsselwörter festgelegt wird. Die Verwendung eines solchen Referenz- oder Ankerwortes hat den Vorteil, dass das Suchfenster dynamisch angepasst wird, je nachdem, an welcher Stelle sich das Referenzwort befindet. Dies erlaubt es, dass auch bei variabler Gestaltung des Dokuments der gewünschte Inhalt korrekt ausgegeben wird.

Es kann vorgesehen sein, dass aus dem Dokumententyp eine Beschreibung zu dem ausgegebenen Inhalt abgeleitet wird, die mit dem Inhalt zugeordnet ausgegeben wird. Soll beispielsweise ein Wert ausgegeben werden, der einem Rechnungsbetrag entspricht, so kann die Beschreibung durch das Wort "Rechnungsbetrag" oder eine ähnliche Bezeichnung oder Umschreibung gegeben sein.

Der Anwendungsbereich des Verfahrens wird erweitert, wenn der Ausleseschritt rekursiv wiederholt wird, wobei mindestens ein weiteres Suchfenster des Dokumententyps verarbeitet wird, um einen weiteren Inhalt auszugeben.

Bei einer weiteren vorteilhaften Ausgestaltung des Verfahrens kann vorgesehen sein, dass in einem vorgeschalteten Einrichtungsschritt ein Dokumententyp definiert und der Liste von Dokumententypen zugefügt wird, indem ein Benutzer ein oder mehrere Schlüsselwörter in einem eingelesenen Dokument anwählt. Eine Anwahl erfolgt beispielsweise mittels eines Anwahlmittels wie einer Maus oder einer berührempfindlichen Oberfläche. Hierbei kann es sich insbesondere um ein Eingabegerät handeln, beispielsweise um eine Computermaus, mit der ein Mauszeiger gesteuert werden kann. Durch einen solchen Einrichtungsschritt kann das Verfahren auf neue Dokumententypen ausgeweitet werden.

Es kann vorgesehen sein, dass ein Referenzwort, beispielsweise das bereits zuvor genannte Referenzwort des Suchfensters, anwählbar ist. Dies erlaubt die Festlegung eines solchen Referenzwortes durch den Anwender des Verfahrens, beispielsweise während des Einrichtungsschritts.

Es kann ferner vorgesehen sein, dass ein Zielort anwählbar ist oder ein Zielwort, um den Zielort im Einrichtungsschritt zu definieren.

Um die automatische Verarbeitung zu vereinfachen, kann vorgesehen sein, dass eine Bildposition eines oder des angewählten Schlüsselworts, Referenzworts und/oder Zielorts automatisch bestimmt wird, indem eine Position eines Auswahlinstruments, insbesondere eines Mauszeigers, in einem durch das eingelesene Dokument auf einem angezeigten Bildschirminhalt vorgegebenen Rahmen ermittelt wird. Insbesondere kann mit dem Mauszeiger auch ein Wortfenster definiert werden.

Zur Vereinfachung des Verfahrens kann vorgesehen sein, dass in einem Einrichtungsschritt, beispielsweise in dem bereits oben genannten Einrichtungsschritt, in einem eingelesenen Dokument, beispielsweise in dem bereits zuvor genannten eingelesenen Dokument, ein Schlüsselwort automatisch angewählt wird. Die automatische Anwahl erfolgt vorzugsweise, indem eine Bildposition einer höchsten Währungszahl in dem Dokument ermittelt wird. Eine solche Währungszahl stellt in der Regel eine Gesamtsumme dar.

Besonders zweckmäßig kann es sein, wenn als Schlüsselwort ein Wort angewählt wird, das unmittelbar in einer Schreibrichtung vor der Bildposition der höchsten Währungszahl steht. Dieses Wort eignet sich besonders als Schlüsselwort, insbesondere für die Bearbeitung von Belegen oder Rechnungen.

Es kann vorgesehen sein, dass dem Schlüsselwort eine Beschreibung als Gesamtsumme zugeordnet wird.

Um die manuellen Eingriffe insbesondere bei der Einrichtung eines neuen Dokumententyps zu minimieren oder zu eliminieren, kann vorgesehen sein, dass als Suchfenster ein Rahmen um die Bildposition zumindest eines der Schlüssel- oder Referenzwörter automatisch definiert wird. Weiter kann vorgesehen sein, dass als Zielort ein Rahmen innerhalb des Suchfensters automatisch definiert wird.

Bei einer weiteren vorteilhaften Ausgestaltung des Verfahrens kann vorgesehen sein, dass ein Buchungsvorgang ausgelöst wird. Das computergestützte Auslösen eines Buchungsvorgangs mittels des zuvor beschriebenen Verfahrens vereinfacht die Buchhaltung und spart daher Kosten.

Für die Weiterverarbeitung kann es wichtig sein, dass der ausgegebene Wert mit einer Verwendung verknüpft ist oder wird und dass diese Verwendung bei der Weiterverarbeitung auch verfügbar ist. Um dies zu erreichen, kann vorgesehen sein, dass eine Verwendung des ausgegebenen Inhalts aus dem ausgewählten Dokumententyp abgeleitet wird. Eine Verwendung kann alternativ oder zusätzlich aus dem eingelesenen Dokument selbst abgeleitet werden. Bei der Verwendung kann es sich beispielsweise um eine Kontonummer handeln, auf welche eine Buchung erfolgen soll.

Die Erfindung wird nun anhand einiger weniger Ausführungsbeispiele näher beschrieben, ist jedoch nicht auf diese wenigen Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: ein einzulesendes Dokument mit den Schlüsselwörtern "Adam", "Eva" und "Otto",
- Fig. 2 bis Fig. 4: eine beispielhafte Ausführung des Identifikationsschritts des erfindungsgemäßen Verfahrens, bei dem der Dokumententyp des in Fig. 1 gezeigten Dokuments identifiziert wird, sowie einer möglichen Generierung einer Geometrie,
- Fig. 5: eine Identifikation des Dokumententyps eines geometrisch verzerrten Ausgangsdokuments,
- Fig. 6: eine erfindungsgemäße Vorgabe eines Suchfensters mittels statischer Zuordnung,
- Fig. 7: eine erfindungsgemäße Vorgabe eines Suchfensters unter Verwendung eines Ankerwortes,
- Fig. 8: eine erfindungsgemäße Einrichtung und Festlegung von Schüsselwörtern, Suchfenster und Zielorten,
- Fig. 9: eine Vergrößerung des Suchfensters,
- Fig. 10: eine Verschiebung des auszugebenden Wortes gegenüber dessen Zielort,
- Fig. 11: eine Suchstrategie mit im Beispiel erfolgreichem Auffinden eines auszugebenden Wortes,
- Fig. 12: eine alternative Suchstrategie mit im Beispiel erfolglosem Auffinden eines auszugebenden Wortes,
- Fig. 13: ein Flussdiagramm eines Ausführungsbeispiel eines erfindungsgemäßen Verfahrens.

Bei der nachfolgenden Beschreibung verschiedener Ausführungsbeispiele der Erfindung erhalten in ihrer Funktion übereinstimmende Elemente auch bei abweichender Gestaltung oder Formgebung übereinstimmende Bezugszahlen.

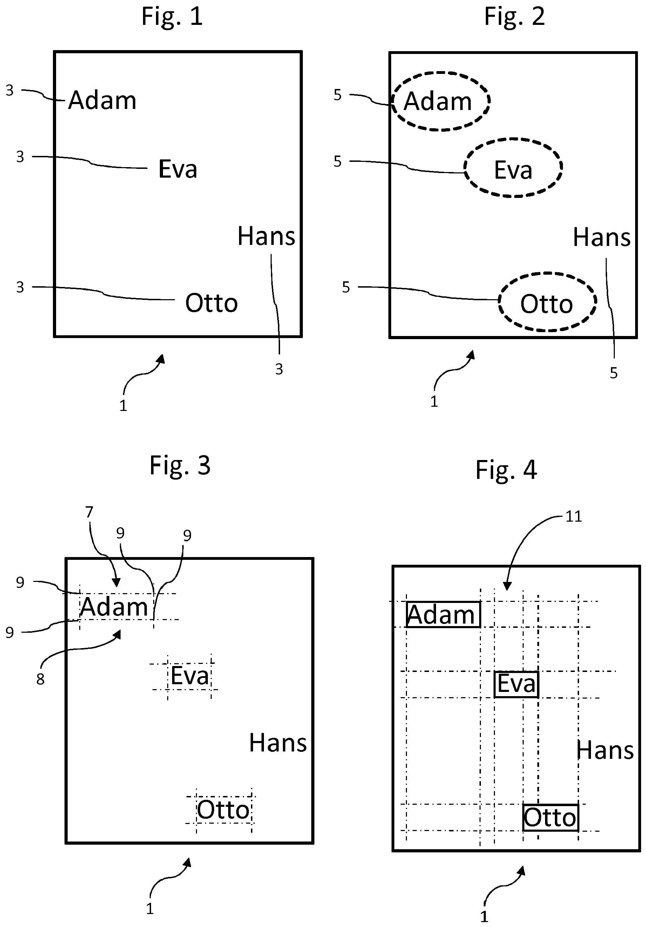

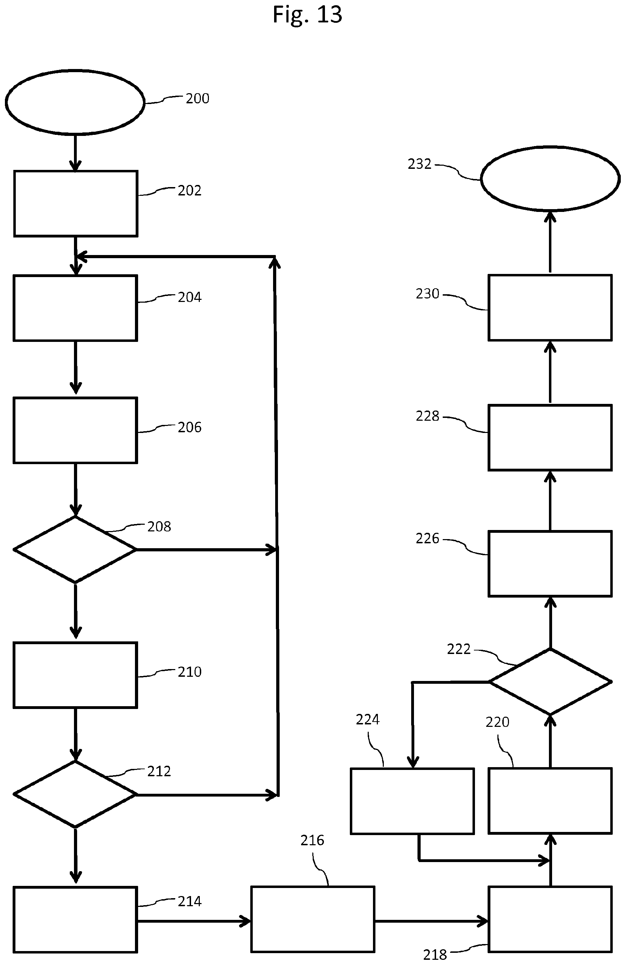

Ein Ausführungsbeispiel eines erfindungsgemäßen Verfahrens zeigt Fig. 13. Dieses Ausführungsbeispiel wird im Folgenden genauer beschrieben. Andere Ausführungsbeispiele ergeben sich durch Variation der einzelnen Schritte und gegebenenfalls auch durch eine alternative Abfolge der einzelnen Verfahrensschritte. Die Fig. 1 bis Fig. 12 dienen der beispielhaften Erläuterung einzelner Verfahrensschritte. Es wird daher bei Beschreibung des Ausführungsbeispiels gemäß Fig. 13 auf diese Bezug genommen.

Das Verfahren beginnt bei Schritt 200. In dieser Situation soll ein Dokument 1, 13, 25, 39, 95, 107 einer automatischen Verarbeitung zugeführt werden. Hierzu wird das Dokument 1, 13, 25, 39, 95, 107 zunächst in Schritt 202 eingelesen. In dem hier dargestellten erfindungsgemäßen Ausführungsbeispiel erfolgt das Einlesen mittels eines Scanners.

In einem nächsten Schritt, welcher durch die Einzelschritte 204 bis 212 detaillierter dargestellt ist, wird der Dokumententyp 21, 53 des Dokuments 1, 13, 25, 39, 95, 107 identifiziert.

Hierzu ist in einem Speicher eine Liste von Dokumententypen 21, 53 hinterlegt. Jeder Dokumententyp 21, 53 weist einen bestimmten Satz von Schlüsselwörtern 5, 57, 61, 65 auf, welche jeweils an einer bestimmten Bildposition 8 des hinterlegten Dokumententyps 21, 53 angeordnet sind.

Nach dem Einlesen des Dokuments 1, 13, 25, 39, 95, 107 wird das eingelesene Dokument 1, 13, 25, 39, 95, 107 mittels eines Texterkennungsprogramms wie beispielsweise einer OCR-Software einer computergestützten Bearbeitung zugeführt.

Aus der Liste von Dokumententypen 21, 53 wird in Schritt 204 ein erster Dokumententyp 21, 53 aus dem Speicher gelesen. Hierbei kann es sich beispielsweise um den Dokumententyp 21, 53 eines zuvor verarbeiteten Dokuments 1, 13, 25, 39, 95, 107 handeln.

Sodann werden in Schritt 206 aus den durch die Texterkennung erkannten Wörtern des Dokuments 1, 13, 25, 39, 95, 107 diejenigen gesucht, welche von einem Satz von Schlüsselwörtern 5 umfasst sind. Dieser Satz von Schlüsselwörtern 5 kann dem Dokumententyp 21, 53 entnommen sein. Alternativ kann der Satz von Schlüsselwörtern 5 vom Anwender vorgegeben sein. In letzterem Fall ist es zweckmäßig, nur solche Dokumententypen 21, 53 zu berücksichtigen, welche den gleichen Satz von Schlüsselwörtern 5 haben.

In Schritt 208 werden die im eingelesen Dokument 1, 13, 25, 39, 95, 107 erkannten Schlüsselwörter 5 mit dem Satz von Schlüsselwörtern 5 verglichen. Sind in dem eingelesenen Dokument 1, 13, 25, 39, 95, 107 nicht alle Schlüsselwörter 5 des Satzes enthalten, springt das Verfahren zurück zu Schritt 204, in dem der nächste Dokumententyp 21, 53 geladen wird, so dass der Vergleich mit dem nächsten Dokumententyp 21, 53 durchgeführt werden kann. Kann kein weiterer Dokumententyp 21, 53 geladen werden, bricht das Verfahren ab, beispielsweise durch Ausgabe einer Fehlermeldung, welche dem Anwender mitteilt, dass es sich bei dem Dokument 1, 13, 25, 39, 95, 107 um einen bislang unbekannten Dokumententyp 21, 53 handelt. Es besteht nun die Möglichkeit, in einem weiter unten beschriebenen Einrichtungsschritt den neuen Dokumententyp 21, 53 zu definieren und der Liste von Dokumententypen 21, 53 zuzufügen.

Sobald sich in Schritt 208 eine Übereinstimmung der Schlüsselwörter 5 ergibt, wird das Verfahren in Schritt 210 fortgesetzt. In diesem Schritt 210 werden die Bildpositionen 8 der erkannten Schlüsselwörter 5 bestimmt und in Schritt 212 mit den Bildpositionen 8 der Schlüsselwörter 5 des geladenen Dokumententyps 21, 53 verglichen. Gibt es keine Übereinstimmung, wird das Verfahren in Schritt 204 fortgesetzt, indem der nächste Dokumententyp 21, 53 geladen wird.

Ergibt sich eine Übereinstimmung, ist der Dokumententyp 21, 53 identifiziert und das Verfahren kann in Schritt 214 fortgesetzt werden.

Ein konkretes Beispiel einer Identifikation eines Dokumententyps 21, 53 zu einem Dokument 1, 13, 25, 39, 95, 107 zeigen Fig. 1 bis 4. Fig. 1 zeigt ein Dokument 1 mit insgesamt vier Wörtern 3 mit den Inhalten "Adam", "Eva", "Otto" und "Hans". Dieses Dokument 1 wird eingescannt. Der Nutzer gibt Schlüsselwörter 5 vor. Im vorliegenden Beispiel sind dies die Wörter 3 "Adam", "Eva", "Otto". Diese Schlüsselwörter 5 werden mittels einer Texterkennungssoftware wie insbesondere einer OCR-Software erkannt. Aus der Liste von Dokumententypen 21, 53 wird ein erster Dokumententyp 21, 53 geladen, welche die Schlüsselwörter 5 enthält. Die Bildpositionen 8 der Schlüsselwörter 5 des eingelesenen Dokuments 1 werden sodann bestimmt, indem die erkannten Schlüsselwörter 5 jeweils in ein Wortfeld 7 eingepasst werden und die Eckpunkte 9 des Wortfelds 7 und deren Koordinaten bestimmt werden. Es ist auch möglich, die vier Daten zu einem gemeinsamen Datum zu kondensieren, beispielsweise durch Mittelwertbildung oder durch Übernahme der Koordinaten einer der Eckpunkte 9. Auf entsprechende Weise kann auch unabhängig von dem hier beschriebenen Ausführungsbeispiel eine Bildposition 8 für Schlüsselwörter, Referenzwörter, Zielwörter oder sonstige Wörter bestimmt werden. Gezeigt ist das zuvor Beschriebene in Fig. 3 lediglich für das Schlüsselwort 5 "Adam". Ein analoges Vorgehen erfolgt auch für die Schlüsselwörter 5 "Eva" und "Otto". Die so ermittelten Bildpositionen 8 der Schlüsselwörter 5 werden mit den Bildpositionen 8 des Dokumententyps 21, 53 verglichen. Stimmen die Bildpositionen 8 bis auf einen Toleranzwert miteinander überein, ist der korrekte Dokumententyp 21, 53 identifiziert. Andernfalls wird der nächste Dokumententyp 21, 53 aus der Liste von Dokumententypen 21, 53 geladen.

Das Wort "Hans" ist dagegen nicht als Schlüsselwort definiert und wird ignoriert. Wenn an dieser Stelle eines der genannten Schlüsselwörter stehen würde, so würde dieses ebenfalls ignoriert, da es an der falschen Bildposition steht.

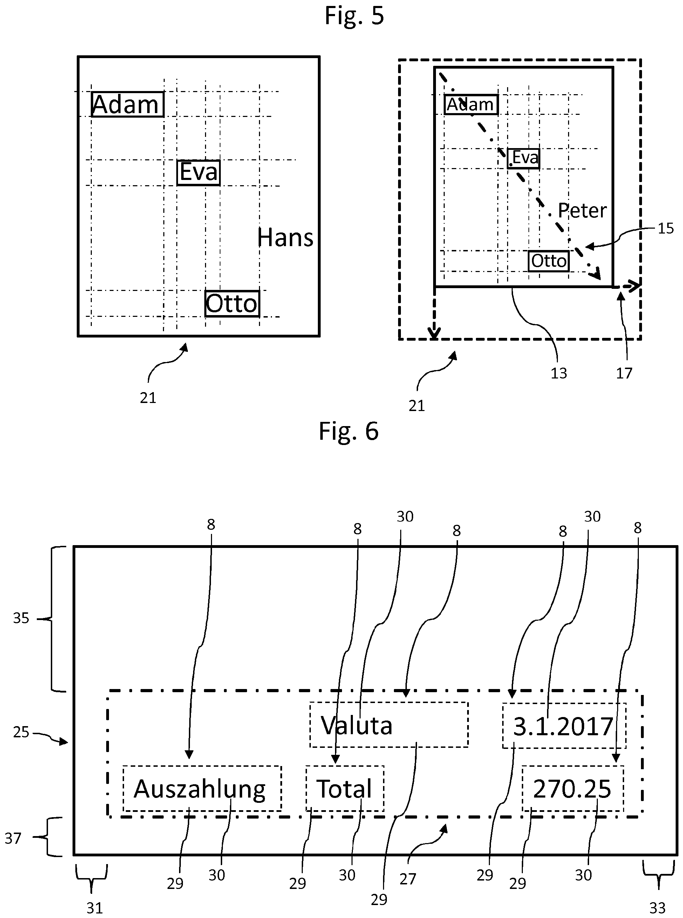

Fig. 5 zeigt, dass das erfindungsgemäße Verfahren auch ein Dokument 13 verarbeiten kann, welches gegenüber dem entsprechenden hinterlegten Dokumententyp 21 eine andere Größe aufweist und/oder auch gegenüber diesem Dokumententyp 21 verschoben sein kann. So zeigt in Fig. 5 der Pfeil an, dass eine Verkleinerung 15 gegenüber dem Dokumententyp 21 besteht. Außerdem besteht eine vertikale Verschiebung 17 und eine horizontale Verschiebung 19 des Dokuments 13 gegenüber dem Dokumententyp 21. Um unter diesen Umständen eine Verarbeitung zu ermöglichen, wird in Schritt 212, in dem die Bildpositionen 8 der Schlüsselwörter 5 des eingelesenen Dokuments 13 und des Dokumententyps 21 miteinander verglichen werden, eine Ähnlichkeitstransformation durchgeführt. Hierbei kann es sich auch um eine allgemeinere Transformation handeln, beispielsweise um eine affine Abbildung. Der Grad der Allgemeinheit der Transformation kann bei höherer Anzahl von verfügbaren Bildpositionen 8 höher sein.

In Schritt 214 wird aus den Bildpositionen 8 der Schlüsselwörter 5 eine Geometrie bestimmt. Die Geometrie wird dabei in dem hier beschriebenen Ausführungsbeispiel durch ein Raster 11 dargestellt.

In Schritt 216 wird ein Suchfenster 27, 41, 55, 73, 75, 85, 97, 109 vorgegeben.

Wie in Fig. 6 illustriert, kann dies in statischer Relation zum Raster 11 geschehen. Die Fensterposition des Suchfensters 27 ist definiert durch die x-Koordinate 31 des linken Randes und die x-Koordinate 33 des rechten Randes des Suchfensters 27 sowie die y-Koordinate 35 des oberen Randes und die y-Koordinate 37 des unteren Randes 37 des Suchfensters 27. Diese Koordinaten 31, 33, 35, 37 stehen in fester Relation zum Raster 11. In dem Suchfenster 27 sind Wörter 30 mit einem jeweils bestimmten Inhalt an ihrem jeweiligen Zielort 29 angeordnet.

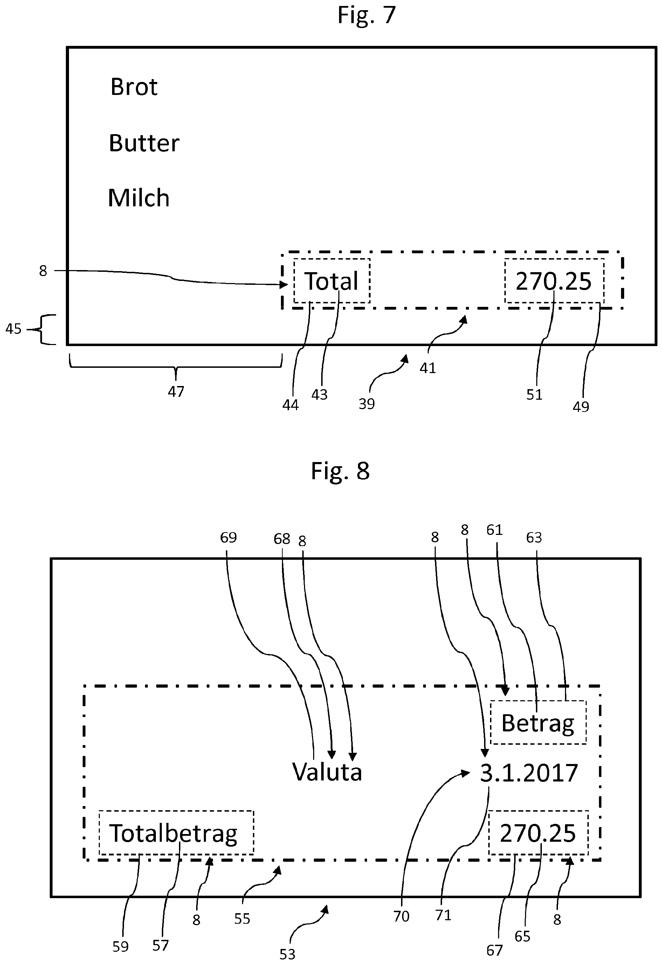

Die Vorgabe eines Suchfensters 27, 41, 55, 73, 75, 85, 97, 109 kann, wie in Fig. 7 illustriert, auch dynamisch in Abhängigkeit von der Bildposition 8 eines Referenzworts 43, 77, 87 erfolgen. Die jeweilige Bildposition 8 kann durch das jeweilige Wortfenster 44, 79, 88 vorgegeben sein. Das Referenzwort 43, 77, 87 fungiert dabei als Ankerwort. In Fig. 7 ist ein Referenzwort 43 definiert. Die x-Koordinate 45 des linken Randes und die y-Koordinate 47 des unteren Randes des Suchfensters 41 sind vorgegeben durch die entsprechenden Koordinaten des Wortfensters 44 des Referenzworts 43. Das Suchfenster 41 ist durch Vorgabe einer Breite und Höhe vollständig definiert und so gewählt, dass es den Zielort 49 mit dem Zielwort 51 umfasst.

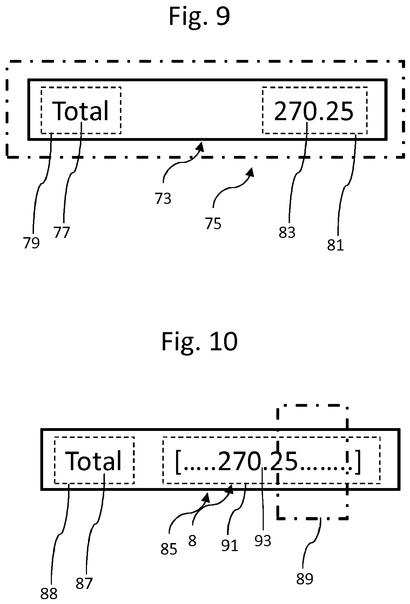

Zur Erhöhung der Robustheit des Verfahrens gegenüber Verschiebungen eines Zielwortes 83 mit Zielort 81 kann das Suchfenster 73 auch durch ein vergrößertes Suchfenster 75 ersetzt sein, wie Fig. 10 illustriert.

In Schritt 218 werden alle Wörter 30, 43, 51, 57, 61, 65, 68, 70, 77, 83, 87, 93, 103, welche sich innerhalb des Suchfensters 27, 41, 55, 73, 75, 85, 97, 109 befinden, ausgelesen. In einem alternativen Ausführungsbeispiel werden nicht alle Wörter 30, 43, 51, 57, 61, 65, 69, 71, 77, 83, 87, 93, 103 innerhalb des Suchfensters 27, 41, 55, 73, 75, 85, 97, 109 ausgelesen oder der Schritt 218 wird sogar vollständig ausgelassen.

In Schritt 220 wird sodann ein Wort, welches in diesem Zusammenhang auch als Zielwort 51, 83, 93, 103, 115 bezeichnet werden kann, ausgelesen, wobei sich das auszulesende Wort am Zielort 29, 49, 81, 89, 91, 99, 111, welcher ein Zielfenster bilden kann, befindet.

In Schritt 222 wird überprüft, ob das Auslesen in Schritt 220 erfolgreich war. War es dies, wird gegebenenfalls weiter überprüft, ob das ausgelesene Wort 51, 83, 93, 103, 115 ein gewünschtes Kriterium erfüllt. Soll beispielsweise ein Datum ausgelesen werden, kann das Kriterium darin bestehen, dass es sich bei dem ausgelesenen Zielwort 51, 83, 93, 103, 115 der Form nach um ein Datum handelt. Ist das Auslesen in Schritt 220 nicht erfolgreich oder ist das Kriterium nicht erfüllt, so wird der Zielort 29, 49, 81, 89, 91, 99, 111 verschoben gemäß einer Suchstrategie 101, 113. Ziel einer solchen Suchstrategie 101, 113 kann es sein, das dem Zielort am nahesten gelegene Wort aufzufinden und auszulesen.

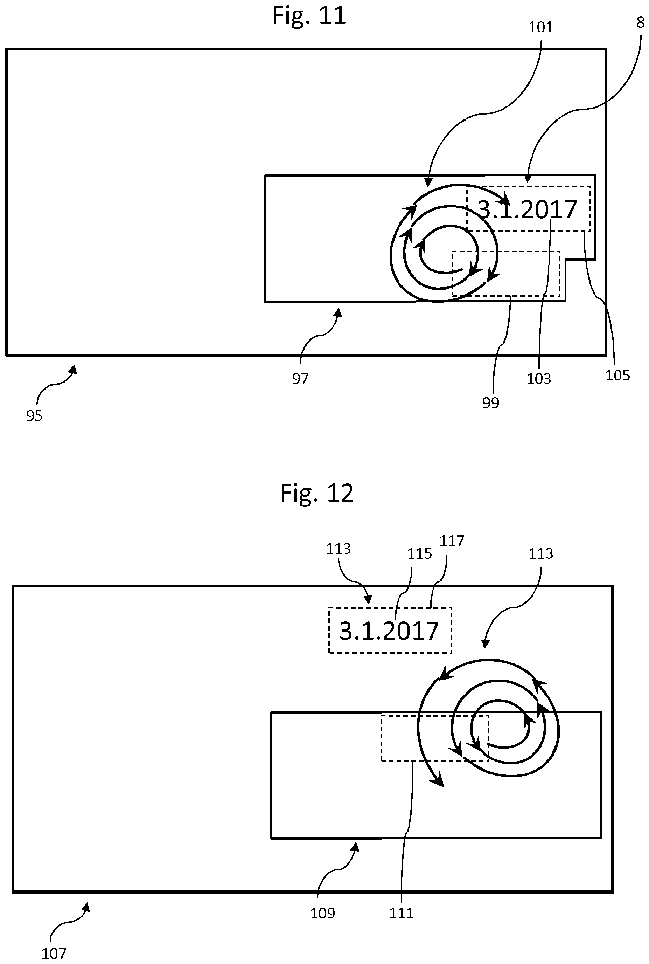

Beispiele von möglichen Suchstrategien 101, 113 sind in Fig. 11 und Fig. 12 illustriert. In Fig. 11 umfasst das Suchfenster 97 einen Bereich, der vor dem Zielort 99 gelegen ist. Eine Suchstrategie kann in diesem Fall darin bestehen, im Uhrzeigersinn spiralförmig zu suchen, wobei zunächst vom Zielort 99 nach vorne gesucht wird. Durch diese Strategie wird das verschobene Zielwort 103 mit Wortfenster 105 gefunden und ausgelesen.

In Fig. 12 umfasst das Suchfenster 109 einen Bereich, der nach dem Suchfenster 109 gelegen ist. Eine Suchstrategie kann in diesem Fall darin bestehen, gegen den Uhrzeigersinn spiralförmig zu suchen, wobei zunächst vom Zielort 111 nach hinten gesucht wird. Durch diese Strategie kann das verschobene Zielwort 115 mit Wortfenster 117 nicht gefunden werden, da es außerhalb des Suchfensters 109 liegt und daher bereits nicht in Schritt 218 ausgelesen wurde.

Das Zielwort 115 wird in einer alternativen Ausführung aufgefunden, bei der das Suchfenster 109 sich auch auf den Bereich vor dem Zielort 111 erstreckt.

Die in Fig. 11 und Fig. 12 dargestellten Suchstrategien sind lediglich beispielhaft. So sind eine Vielzahl anderer Suchstrategien denkbar. Eine einfache Suchstrategie könnte auch darin bestehen, die in Schritt 118 aufgefundenen Wörter in der Reihenfolge des Auffindens in eine Liste zu schreiben.

Die Reihenfolge kann beispielsweise einer Lesereihenfolge entsprechen. Sodann kann ein Anfangspunkt in der Liste definiert werden, welcher dem Zielort 29, 49, 81, 89, 91, 99, 111 entspricht. Sodann wird dasjenige Wort aus der Liste angewählt, welches beispielsweise direkt vor dem Anfangspunkt liegt. Erfüllt das Wort nicht ein gefordertes Kriterium wie etwa das Format eines Datums oder eines Geldbetrags, so wird das in der Liste nachfolgende Wort angewählt. Erfüllt dieses wiederum nicht das geforderte Kriterium, wird das Wort angewählt, welches zwei Wörter vor dem Anfangspunkt liegt. Diese Strategie kann sodann verfolgt werden, bis ein Wort aufgefunden ist, welches das geforderte Kriterium erfüllt.

Wie Fig. 10 zeigt, kann vor der Ausführung einer Suchstrategie 101, 113 eine Korrektur des Zielorts 89, 91 erfolgen. Ist, wie in Fig. 10 gezeigt, ein im Suchfenster 85 gelegenes Zielwort 93 teilweise vom erwarteten Zielort 89 überdeckt, so kann der erwartete Zielort 89 korrigiert werden, so dass der korrigierte Zielort 91 zumindest das Zielwort 93 enthält. Eine Korrektur kann auch erfolgen, wenn keine teilweise Überdeckung besteht, beispielsweise durch autonome Veränderung des Zielorts 89 wie ein Verschieben und/oder Vergrößern eines Zielfensters.

Ist sodann in Schritt 222 erfolgreich ein Wort 51, 83, 93, 103, 115 am gegebenenfalls verschobenen Zielort 29, 49, 81, 89, 91, 99, 111 aufgefunden, so wird in Schritt 226 der Inhalt des aufgefundenen Worts 51, 83, 93, 103, 115 ausgegeben. Die Ausgabe erfolgt im hier beschriebenen Ausführungsbeispiel in einen Speicher, der auch ein Arbeitsspeicher sein kann.

In Schritt 228 wird der ausgegebene Inhalt mit einer Verwendung verknüpft, welche dem Dokumententyp 21, 53 entnommen wird. Hierzu enthält der Dokumententyp 21, 53 eine Zuordnung von Zielort 29, 49, 81, 89, 91, 99, 111 und Verwendung. So kann es sich bei der Verwendung beispielsweise eine Kontonummer handeln, auf welche eine Buchung erfolgen soll.

In Schritt 230 wird sodann die Buchung automatisch ausgeführt und das Verfahren ist in Schritt 232 beendet.

Wie bereits weiter oben beschrieben, kann der Fall eintreten, dass bei der Identifikation des Dokumententyps 21, 53 die gesamte Liste von bekannten Dokumententypen 21, 53 erfolglos durchlaufen wird, so dass in Schritt 204 kein weiterer Dokumententyp 21, 53 zur Verfügung steht, so dass vorgesehen sein kann, dass ein neuer Dokumententyp 21, 53 in einem Einrichtungsschritt eingerichtet wird.

Ein Beispiel für das Einrichten eines neuen Dokumententyps 53 ist in Fig. 8 gezeigt. Dort ist ein Dokumententyp 53 gezeigt, für das ein erstes Schlüsselwort 57, ein zweites Schlüsselwort 61 und ein drittes Schlüsselwort 65 definiert werden soll. Das erste Schlüsselwort 57 besteht aus dem Wort "Totalbetrag", das zweite Schlüsselwort 61 aus dem Wort "Betrag" und das dritte Schlüsselwort 65 aus dem Wert, der in dem Beleg dem "Totalbetrag" zugeordnet ist. Dies ist im vorliegenden Beispiel der Wert "270.25", kann jedoch von Beleg zu Beleg unterschiedlich sein. Das dritte Schlüsselwort 65 ist als die höchste Währungszahl des Belegs definiert und ist durch den Inhalt des Schlüsselwortes 65 gegeben.

Weiter wird ein Suchfenster 55 definiert, für das die drei Schlüsselwörter 57, 61, 65 zugleich Referenzwörter bilden. Das Suchfenster 55 ist dabei definiert durch die Umrandungen der Wortfenster 59, 63, 67 der drei Referenzwörter.

Weiter werden Zielorte 67, 69 und 71 definiert.

Die drei Schlüsselwörter 57, 61, 65, die entsprechenden Referenzwörter und die Zielorte 67, 69, 71 werden zusammen mit deren Bildpositionen 8 für den neuen Dokumententyp 53 hinterlegt, welcher sodann der Liste von Dokumententypen 21, 53 zugefügt wird.

Zusammenfassend wird vorgeschlagen, bei einem Verfahren zur automatischen Verarbeitung eines einzulesenden Dokuments 1, 13, 25, 39, 95, 107 vorzusehen, dass in einem Identifikationsschritt 202, 204, 206, 208, 210, 212 Schlüsselwörtern 5, 57, 61, 65 jeweils eine zugehörige Bildposition 8 in dem eingelesenen Dokument 1, 13, 25, 39, 95, 107 computergestützt ermittelt und anhand der ermittelten Bildpositionen 8 ein Dokumententyp 21, 53 für das eingelesene Dokument 1, 13, 25, 39, 95, 107 aus einer Liste von Dokumententypen 21, 53 computergestützt ausgewählt wird, dass der ausgewählte Dokumententyp 21, 53 ein Suchfenster 27, 41, 55, 73, 75, 85, 97, 109 vorgibt (Schritt 216), dessen Fensterposition 31, 33, 35, 37, 45, 47 im eingelesenen Dokument 1, 13, 25, 39, 95, 107 relativ zu einer durch die ermittelten Bildpositionen 8 gegebenen Geometrie 11 des eingelesenen Dokuments 1, 13, 25, 39, 95, 107 definiert ist, und dass in einem Ausleseschritt 218, 220, 222, 224 ein Wort 30, 43, 51, 57, 61, 65, 69, 71, 77, 83, 87, 93, 103 in dem Suchfenster 27, 41, 55, 73, 75, 85, 97, 109 computergestützt ausgelesen wird, dessen Inhalt ausgegeben wird (Schritt 226).

### Bezugszeichenliste

- 1: Dokument
- 3: Wort
- 5: Schlüsselwort
- 7: Wortfeld
- 8: Bildposition
- 9: Eckpunkte von 7
- 11: Raster
- 13: weiteres Dokument
- 15: Schrumpfung
- 17: Vertikale Verschiebung
- 19: Horizontale Verschiebung
- 21: Dokumententyp
- 25: weiteres Dokument
- 27: Suchfenster
- 29: Zielort
- 30: Wort
- 31: x-Koordinate des linken Randes von 27
- 33: x-Koordinate des rechten Randes von 27
- 35: y-Koordinate des oberen Randes von 27
- 37: y-Koordinate des unten Randes von 27
- 39: weiteres Dokument
- 41: Suchfenster
- 43: Referenzwort
- 44: Wortfenster von 43
- 45: x-Koordinate des linken Randes von 41
- 47: y-Koordinate des unteren Randes von 41
- 49: Zielort
- 51: Zielwort
- 53: weiterer Dokumententyp
- 55: Suchfenster
- 57: ein erstes Schlüsselwort
- 59: Wortfenster von 55
- 61: ein zweites Schlüsselwort
- 63: Wortfenster von 61
- 65: ein drittes Schlüsselwort
- 67: Wortfenster von 65
- 68: Wort in 55
- 69: Zielort von 68
- 70: weiteres Wort in 55
- 71: Zielort von 70
- 73: Suchfenster
- 75: vergrößertes Suchfenster
- 77: Referenzwort
- 79: Wortfenster von 77
- 81: Zielort
- 83: Zielwort
- 85: Suchfenster
- 87: Referenzwort
- 88: Wortfenster von 87
- 89: erwarteter Zielort
- 91: korrigierter Zielort
- 93: Zielwort
- 95: weiteres Dokument
- 97: Suchfenster
- 99: Zielort
- 101: Suchstrategie
- 103: Zielwort
- 105: Wortfenster von 103
- 107: weiteres Dokument
- 109: Suchfenster
- 111: Zielort
- 113: Suchstrategie
- 115: Zielwort
- 117: Wortfenster von 103
- 200: Beginn des Verfahrens
- 202: Dokument einlesen
- 204: nächsten Dokumententyp anwählen
- 206: Schlüsselwörter erkennen
- 208: Vergleich mit angewähltem Dokumententyp
- 210: Bildpositionen bestimmen
- 212: Vergleich mit angewähltem Dokumententyp
- 214: Erstellen einer Geometrie
- 216: Vorgabe des Suchfensters
- 218: Auslesen von Wörtern in Suchfenster
- 220: Wert an Zielort auslesen
- 222: Überprüfung des ausgelesenen Wertes
- 224: Verschieben des Zielorts
- 226: Übernahme des ausgelesenen Wertes
- 228: Verknüpfung des ausgelesenen Wertes mit Verwendung
- 230: Ausführen einer Buchung
- 232: Ende des Verfahrens

## Patentansprüche

1. Verfahren zur automatischen Verarbeitung eines Dokuments (1, 13, 25, 39, 95, 107), wobei ein Dokument (1, 13, 25, 39, 95, 107) eingelesen wird und in dem eingelesenen Dokument (1, 13, 25, 39, 95, 107) automatisch ein Satz von Schlüsselwörtern (5, 57, 61, 65) gesucht wird, **dadurch gekennzeichnet, dass** in einem Identifikationsschritt (202, 204, 206, 208, 210, 212) zu den Schlüsselwörtern (5, 57, 61, 65) des Satzes jeweils eine zugehörige Bildposition (8) in dem eingelesenen Dokument (1, 13, 25, 39, 95, 107) computergestützt ermittelt und zumindest anhand der ermittelten Bildpositionen (8) ein Dokumententyp (21, 53) für das eingelesene Dokument (1, 13, 25, 39, 95, 107) aus einer Liste von Dokumententypen (21, 53) computergestützt ausgewählt wird, dass der ausgewählte Dokumententyp (21, 53) ein Suchfenster (27, 41, 55, 73, 75, 85, 97, 109) vorgibt (216), dessen Fensterposition (31, 33, 35, 37, 45, 47) im eingelesenen Dokument (1, 13, 25, 39, 95, 107) relativ zu einer durch die ermittelten Bildpositionen (8) gegebenen Geometrie (11) des eingelesenen Dokuments (1, 13, 25, 39, 95, 107) definiert ist, und dass in einem Ausleseschritt (218, 220, 222, 224) ein Wort (30, 43, 51, 57, 61, 65, 69, 71, 77, 83, 87, 93, 103) in dem Suchfenster (27, 41, 55, 73, 75, 85, 97, 109) computergestützt ausgelesen wird, dessen Inhalt ausgegeben wird (226).

2. Verfahren nach Anspruch 1, **dadurch gekennzeichnet, dass** in dem Suchfenster (27, 41, 55, 73, 75, 85, 97, 109) ein Zielort (29, 49, 81, 89, 91, 99, 111) definiert ist, dass alle Wörter (30, 43, 51, 57, 61, 65, 69, 71, 77, 83, 87, 93, 103) im Suchfenster (27, 41, 55, 73, 75, 85, 97, 109) ausgelesen werden (218) und dass der Inhalt desjenigen Wortes (30, 43, 51, 57, 61, 65, 69, 71, 77, 83, 87, 93, 103), das im Suchfenster (27, 41, 55, 73, 75, 85, 97, 109) am nächsten am Zielort (29, 49, 81, 89, 91, 99, 111) liegt und/oder dessen Inhalt ein vorgegebenes Kriterium erfüllt, ausgegeben wird (218, 220, 222, 224), insbesondere wobei die Wörter (30, 43, 51, 57, 61, 65, 69, 71, 77, 83, 87, 93, 103) im Suchfenster (27, 41, 55, 73, 75, 85, 97, 109) in Spalten oder Zeilen nach ihrer jeweiligen Bildposition (8) geordnet werden und dasjenige Wort (30, 43, 51, 57, 61, 65, 69, 71, 77, 83, 87, 93, 103) ausgewählt wird, welches das oder ein Kriterium erfüllt und/oder in einer durch die Spalte oder Zeile vorgegebenen Reihenfolge am nächsten zum Zielort (29, 49, 81, 89, 91, 99, 111) liegt.

3. Verfahren nach einem der vorangehenden Ansprüche, **dadurch gekennzeichnet, dass** die Fensterposition (31, 33, 35, 37, 45, 47) des Suchfensters (27, 41, 55, 73, 75, 85, 97, 109) einen Parameter enthält, der durch eine Bildposition (8) eines Referenzwortes (43, 77, 87) in dem eingelesenen Dokument (1, 13, 25, 39, 95, 107) relativ zu den Bildpositionen (8) der Schlüsselwörter festgelegt wird (214, 216).

4. Verfahren nach einem der vorangehenden Ansprüche, **dadurch gekennzeichnet, dass** aus dem Dokumententyp (21, 53) eine Beschreibung zu dem ausgegebenen Inhalt abgeleitet wird, die mit dem Inhalt zugeordnet ausgegeben wird (226).

5. Verfahren nach einem der vorangehenden Ansprüche, **dadurch gekennzeichnet, dass** rekursiv der Ausleseschritt (218, 220, 222, 224) wiederholt wird, wobei mindestens ein weiteres Suchfenster (27, 41, 55, 73, 75, 85, 97, 109) des Dokumententyps (21, 53) verarbeitet wird, um einen weiteren Inhalt auszugeben.

6. Verfahren nach einem der vorangehenden Ansprüche, **dadurch gekennzeichnet, dass** in einem vorgeschalteten Einrichtungsschritt ein Dokumententyp (21, 53) definiert und der Liste von Dokumententypen (21, 53) zugefügt wird, indem ein Benutzer ein oder mehrere Schlüsselwörter (5, 57, 61, 65) in einem eingelesenen Dokument (1, 13, 25, 39, 95, 107) anwählt.

7. Verfahren nach einem der vorangehenden Ansprüche, **dadurch gekennzeichnet, dass** eine Bildposition (8) eines angewählten Schlüsselworts (5, 57, 61, 65), Referenzworts (43, 77, 87) und/oder Zielorts automatisch bestimmt wird, indem eine Position eines Auswahlinstruments, insbesondere eines Mauszeigers, in einem durch das eingelesene Dokument (1, 13, 25, 39, 95, 107) auf einem angezeigten Bildschirminhalt vorgegebenen Rahmen ermittelt wird.

8. Verfahren nach einem der vorangehenden Ansprüche, **dadurch gekennzeichnet, dass** in einem oder dem Einrichtungsschritt in einem oder dem eingelesenen Dokument (1, 13, 25, 39, 95, 107) ein Schlüsselwort (5, 57, 61, 65) automatisch angewählt wird, indem eine Bildposition (8) einer höchsten Währungszahl (30, 51, 65, 83, 93) in dem Dokument (1, 13, 25, 39, 95, 107) ermittelt wird.

9. Verfahren nach einem der vorangehenden Ansprüche, **dadurch gekennzeichnet, dass** als Schlüsselwort (5, 57, 61, 65) ein Wort angewählt wird, das unmittelbar in einer Schreibrichtung vor der Bildposition (8) der höchsten Währungszahl (30, 51, 65, 83, 93) steht.

10. Verfahren nach einem der vorangehenden Ansprüche, **dadurch gekennzeichnet, dass** dem Schlüsselwort (5, 57, 61, 65) eine Beschreibung als Gesamtsumme zugeordnet wird.

11. Verfahren nach einem der vorangehenden Ansprüche, **dadurch gekennzeichnet, dass** als Suchfenster (27, 41, 55, 73, 75, 85, 97, 109) ein Rahmen um die Bildposition (8) zumindest eines der Schlüsselwörter (5, 57, 61, 65) oder Referenzwörter (43, 77, 87) automatisch definiert wird.

12. Verfahren nach einem der vorangehenden Ansprüche, **dadurch gekennzeichnet, dass** als Zielort (29, 49, 81, 89, 91, 99, 111) ein Rahmen innerhalb des Suchfensters (27, 41, 55, 73, 75, 85, 97, 109) automatisch definiert wird.

13. Verfahren nach einem der vorangehenden Ansprüche, **dadurch gekennzeichnet, dass** ein Buchungsvorgang ausgelöst wird (230), insbesondere wobei eine Verwendung des ausgegebenen Inhalts aus dem ausgewählten Dokumententyp (21, 53) abgeleitet wird (228).
